# EUROPÄISCHE PATENTSCHRIFT

(11) **EP 1 410 841 B1**
(45) Veröffentlichungstag und Bekanntmachung des Hinweises auf die Patenterteilung: **02.04.2008**
(21) Anmeldenummer: 03023351.4
(22) Anmeldetag: 15.10.2003
(51) Int. Cl.: B01F 15/04, G05D 11/13, B01J 19/00

(54) **Verfahren zur kombinatorischen Herstellung von Mischungen sowie seine Verwendung**
Process for the combinatorial production of mixtures and its use
Procédé pour la production combinatoire de mélanges et son utilisation

(30) Priorität: 18.10.2002 DE 10248639
(43) Veröffentlichungstag der Anmeldung: 21.04.2004
(73) Patentinhaber: Ticona GmbH, 65451 Kelsterbach (DE)
(72) Erfinder: Haubs, Michael, Dr., 55545 Bad Kreuznach (DE); Reisinger, Thomas, Dr., 55128 Ingelheim (DE); Schneller, Arnold, Dr., 64342 Seeheim-Jugenheim (DE)

(56) Entgegenhaltungen:
- WO-A-02/34381
- WO-A-02/38354
- DE-A- 10 125 571
- US-A- 3 935 971
- US-A- 4 571 319

## Beschreibung

Die vorliegende Erfindung betrifft ein Verfahren zur kombinatorischen Herstellung von Mischungen von chemischen Verbindungen, beispielsweise zur Herstellung von Kunststoffmischungen, die zur Hochdurchsatz-Screening geeignet sind.

Zur Herstellung von Mischungen chemischer Verbindungen sind bereits eine Reihe von automatisch arbeitenden Vorrichtungen entwickelt worden. So wird in der US-A-4,595,496 eine Vorrichtung zur kontrollierten Beschickung einer Apparatur für die Flüssigkeitschromatographie beschrieben, bei der die aufzutragenden Flüssigkeiten in einzelnen Vorratseinrichtungen vorgelegt werden und über Zuleitungen und eine Pumpe der Chromatographiesäule zugeführt werden. Die Zuführung erfolgt mittels einer Pumpe. In jeder Zuleitung ist ein Ventil vorgesehen, dass selektiv und periodisch aktiviert wird. Damit ist es möglich, die durch den Betrieb der Pumpe hervorgerufenen Schwankungen in der Förderleistung der zugeführten Mischung abzuschwächen.

Der Einsatz von hochautomatisierten, kombinatorischen Methoden zur Prüfung von Substanzen auf ihre Wirksamkeit ist fester Bestandteil der Pharma- und Pflanzenschutzforschung. Dabei bezieht sich der Begriff Kombinatorik im allgemeinen auf die Herstellung einer Vielzahl von chemisch unterschiedlichen Verbindungen oder Mischungen und die anschließende schnelle Prüfung dieser Substanzbibliotheken auf eine oder mehrere Eigenschaften. Da sich mit diesen Methoden neben weiteren Vorteilen vor allem eine starke Beschleunigung des Probendurchsatzes erzielen lässt, wird dafür synonym auch der Begriff Hochdurchsatz-Screening verwendet. Mit diesen Methoden lassen sich beispielsweise in der Wirkstoffforschung pro Tag mehrere 10.000 Substanzen auf ihre Wirksamkeit überprüfen. Der Einsatz von kombinatorischen Methoden wird beispielsweise beschrieben von Lowe, JCS Reviews, 309-317 (1995), 20 N.K. Terreft, Combinatorial Chemistry, Oxford University Press, Oxford, 1998, Combinatorial Chemistry and Molecular Diversity in Drug Discovery (Hrsg.: E. M. Gordon, J. F. Kerwin), Wiley, New York 1998.

In der letzten Zeit finden diese Methoden der kombinatorischen Chemie und des Hochdurchsatz-Screenings zunehmend Aufmerksamkeit in der Materialwissenschaft, beispielsweise bei der Entwicklung von optischen Funktionsmaterialien oder dem Auffinden neuer Katalysatoren. Ein Überblick über diese neueren Entwicklungen findet sich beispielhaft in dem Artikel von B. Jandeleit, D.J. Schäfer, T.S. Powers, H.VV. Turner, W.H. Weinberg in Angewandte Chemie 1999, 111, 2648-2689.

Bisher haben auf dem Gebiet der Formulierungen, und hier insbesondere der Polymerformulierungen, kombinatorische Methoden kaum Eingang in Forschung und Entwicklung gefunden.

Die bisher beschriebenen Ansätze zur Herstellung und Ausprüfung von Substanzbibliotheken, auch für Polymere oder Polymerformulierungen, beruhen auf diskreten, räumlich getrennten Behältnissen (Kompartimenten), in denen die Mischungen hergestellt und anschließend geprüft werden.

In der US-A-5,985,356 werden die Herstellung und das Screening von unterschiedlichen anorganischen oder organischen Materialien beschrieben. Darin wird auch die Copolymerisation von Styrol mit Acrylnitril in Toluol in einer Anordnung bestehend aus Kompartimenten mit einer Größe von 3x3x5 mm beschrieben. Dies bedingt aufwendige Vorrichtungen zur exakten Dosierung von Monomeren und Initiator.

Die WO-A-99/52,962 beschreibt eine Methode zur Herstellung von alternierenden Copolymeren. Dabei wird beispielsweise systematisch in einer Anordnung von 8 mal 14 Reaktionskolben jeweils die Diol- und die Dicarbonsäure-Komponente variiert und die erhaltenen Copolymeren werden hinsichtlich ausgewählter Eigenschaften untersucht.

Die WO-A-00/40331 beschreibt eine Vorrichtung und eine kombinatorische Methode zum Auffinden von Katalysatoren und Polymeren. Dabei kommt eine Apparatur zur Polymerisation von Monomeren in parallel angeordneten Reaktoren zum Einsatz.

In einem Diskussionspapier des National Instituts of Standards and Technology (M.R. Nyden, J.W. Gilman, Proceedings, Fire Retardant Chemicals Association, March 12-15, 2000, Washington, DC, 1-5 pp, 2000) findet sich ein Hinweis auf die kontinuierliche Herstellung von Polymerformulierungen. (Internet-Adresse: http:/fire.nist.gov/bfrlpubs/fire00/PDF/f00017.pdf).

In dieser Publikation wird ein Verfahren zur kontinuierlichen Herstellung und Ausprüfung von Polymerformulierungen mit Flammschutzmitteln diskutiert, wozu eine Anlage bestehend aus einer rechnergesteuerten, gravimetrischen Feststoffzufuhr und einem nicht näher spezifizierten Extruder vorgeschlagen wird. Die Anordnung soll Polymere mit Flammschutzadditiven in vorab programmierten Konzentrationen extrudieren, die anschließend on-line analysiert und hinsichtlich Brandverhalten geprüft werden.

Die Konzentrationsvariation des Flammschutzadditivs soll deterministisch über die rechnergesteuerte, gravimetrische Dosiereinheit in vorab festgelegten Konzentrationsschritten erfolgen, ohne Abdeckung des kompletten Phasenraumes.

Die WO-A-0 234 381 offenbart ein Verfahren gemäß dem Oberbegriff des Anspruchs 1.

Ein Phasenraum beinhaltet alle theoretisch möglichen Zusammensetzungen eines Mehrkomponentensystems. Er lässt sich als ein mehr-dimensionaler Raum mit orthogonalen Koordinaten darstellen, welche die Konzentrationen der die Mischung ausmachenden Komponenten angeben. Bei einer Mischung aus beispielsweise fünf Komponenten ist ein Punkt im fünf-dimensionalen Phasenraum durch die Angabe der Konzentrationen der fünf Komponenten eindeutig festgelegt.

Phasenräume lassen sich nur mit einer bestimmten Genauigkeit abbilden. Da jedes Mehrkomponentensystem unendlich viele Zusammensetzungen aufweist, muss in der Praxis mit einer begrenzten Kompositionsgenauigkeit gearbeitet werden. Je höher die Kompositionsgenauigkeit gewünscht wird, desto mehr Mischungen mit unterschiedlicher Konzentration müssen hergestellt werden.

Bisher sind keine Verfahren bekannt, bei der Herstellung von Mischungen den kompletten Phasenraum oder ausgewählte Teile des Phasenraumes mit einer vorgegebenen Auflösung abzudecken.

Aufgabe der vorliegenden Erfindung ist es, ein solches Verfahren anzugeben.

Eine weitere Aufgabe der vorliegenden Erfindung besteht darin, eine Verwendung des Verfahrens zum Hochdurchsatz-Screening für Mehrkomponentenformulierungen (mindestens zwei Komponenten) bereitzustellen.

Eine weitere Aufgabe der vorliegenden Erfindung besteht in der Bereitstellung eines Verfahrens, mit dem in einfacher Weise die Kompositionsgenauigkeit von Mischungen gezielt eingestellt werden kann, um den apparativen und zeitlichen Aufwand für eine gegebene Aufgabe zu minimieren.

Die Erfindung betrifft ein Verfahren zur kontinuierlichen Herstellung von Mischungen aus mindestens zwei Komponenten gemäß Anspruch 1.

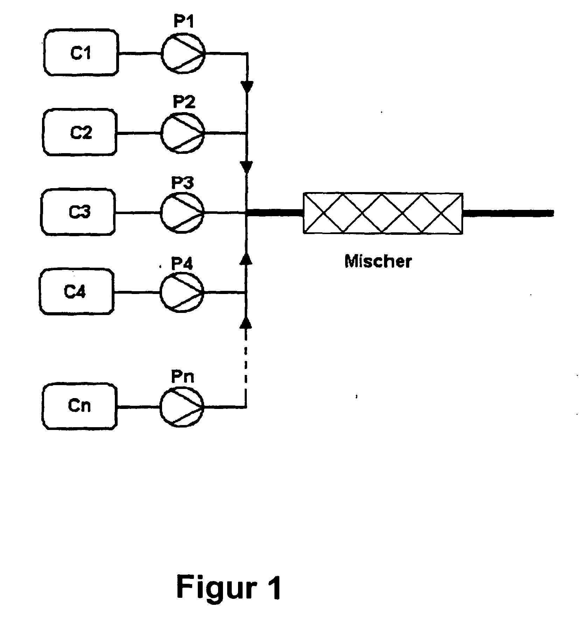

Die Lösung der obengenannten Aufgaben wird beispielhaft für ein System mit n Komponenten anhand des in Figur 1 dargestellten Schemas beschrieben.

Die Komponenten 1 bis n befinden sich in den Vorratsbehältern C₁ bis Cₙ, wobei die Komponente i im Behälter Cᵢ ist. Die Behälter Cᵢ sind jeweils über eine Fördervorrichtung (z.B. einer Pumpe) Pᵢ mit einer Mischeinrichtung (nachstehend auch als Mischer M bezeichnet) verbunden. Am Ausgang des Mischers kann die fertige Mehrkomponentenmischung weiterverwendet werden.

Zur Abdeckung des gesamten Phasenraumes wird die Förderleistung FL(t) (FL(t)= dV/dt) [V=pro Zeiteinheit gefördertes Volumen; t=Zeit] der einzelnen Fördereinrichtungen (z.B. Pumpen) zeitabhängig gesteuert. Dabei sind alle Fördereinrichtungen einzeln steuerbar und können unterschiedlichen Förder-Zeit-Funktionen FL(t) folgen. Die Form der periodischen Förder-Zeit-Funktion FL(t) kann eine beliebige periodische Funktion annehmen oder auch konstant sein, wobei mindestens eine dieser Förder-Zeit-Funktionen FL(t) periodisch sein muss und mindestens eine dieser Förder-Zeit-Funktionen nicht pulsförmig verläuft (FL(t) < ∞)

Mit dem erfindungsgemäßen Verfahren lässt sich der gesamte Phasenraum einer Mischung von vorgegebenen Komponenten mit vorgegebener und beliebig großer Genauigkeit abdecken.

Mindestens die Förderleistung einer Fördereinrichtung wird periodisch variiert.

Vorzugsweise werden die Förderleistungen mehrerer Fördereinrichtungen periodisch variiert, wobei die Frequenzen der Variationen sich voneinander unterscheiden.

Besonders bevorzugt ist ein Verfahren, worin die Variation der Förderleistung einer Fördereinrichtung monoton steigend oder fallend ist und worin die Variation der Förderleistung aller weiteren Fördereinrichtungen periodisch ist.

Besonders bevorzugt ist weiterhin ein Verfahren, worin die Variation der Förderleistung mindestens einer Fördereinrichtung, vorzugsweise aller periodischen Variationen, einer Sägezahnfunktion oder einer Sinusfunktion entspricht, deren Perioden bevorzugt zeitlich konstant sind.

Ganz besonders bevorzugt ist ein Verfahren, worin die Variation der Förderleistung mindestens einer Fördereinrichtung einer periodischen Treppenfunktion entspricht, deren Perioden und Stufenlängen bevorzugt zeitlich konstant sind.

Eine weitere besonders bevorzugte Variante des erfindungsgemäßen Verfahrens ist dadurch gekennzeichnet, dass Perioden oder Stufenlängen der Variation der Förderleistungen der einzelnen Fördereinrichtungen ganzzahlige Vielfache einer Grundperiode sind, wobei vorzugsweise das Verhältnis zweier beliebiger Perioden oder Stufenlängen der Variation der Förderleistung der Fördereinrichtungen oder wobei vorzugsweise das Verhältnis einer Periode und einer Stufenlänge der Variation der Förderleistung zweier Fördereinrichtungen halbzahlig ist und insbesondere 0,5 oder 1,5 oder 2,5 beträgt.

Die Perioden oder Stufenlängen der Variationen der Förderleistungen der einzelnen Fördereinrichtungen betragen vorzugsweise ein ganzzahliges Vielfaches einer Grundperiode und die minimale Periode oder Stufenlänge kann beliebig gewählt werden.

Bevorzugt wird die Periode oder Stufenlänge der Variation der Förderleistungen der einzelnen Fördereinrichtungen zeitlich konstant gehalten.

Bevorzugt werden die Phasenverschiebungen der Perioden oder der Stufenlängen der Variation der Förderleistungen der einzelnen Fördereinrichtungen zeitlich konstant gehalten.

Ganz besonders bevorzugt werden die Phasenverschiebungen der Perioden oder Stufenlängen der Förderleistungen der einzelnen Fördereinrichtungen gleich null gehalten.

Besonders bewährt haben sich folgende Verfahrensmassnahmen, die einzeln oder in Kombination von einer oder mehreren dieser Massnahmen zum Einsatz kommen können:
A) eine Fördereinrichtung wird monoton steigend oder fallend betrieben;
B) alle weiteren Fördereinrichtungen folgen periodischen Funktionen;
C) die Frequenzen der Fördervorrichtungen für die einzelnen Komponenten unterscheiden sich voneinander;
D) die optimale Funktion einer Fördereinrichtung entspricht einer Sägezahnfunktion oder einer Sinusfunktion;
E) die optimale Funktionen aller weiteren Fördereinrichtungen folgen periodischen Treppenfunktionen;
F) die Perioden und Stufenlängen sind bevorzugt zeitlich konstant;
G) das Verhältnis zweier beliebiger Perioden oder Stufenlängen oder das Verhältnis einer Periode und einer Stufenlänge ist bevorzugt halbzahlig (z.B. 0,5 oder 1,5 oder 2,5);
H) das Frequenzverhältnis ist proportional der angestrebten Kompositionsgenauigkeit;
I) bevorzugt fangen alle periodischen Funktionen mit der minimalen Förderleistung an FL(t=0) = FLₘᵢₙ;
J) die Phasenverschiebung zweier beliebiger periodischer Funktionen untereinander kann ebenfalls frei gewählt werden (allerdings für den Fall der Treppenfunktion ist sie bevorzugt gleich null);
K) die maximale Förderleistung der Fördervorrichtungen (Amplitude der periodischen Funktion) relativ zueinander richtet sich nach den gewünschten Zusammensetzungen;
L) die Auflösung der Zusammensetzungen ist proportional Anzahl der eingestellten Konzentrationen zwischen dem Minimum der Dosierung und dem Maximalwert.

Die minimale Frequenz der periodischen Förder-Zeit-Funktionen FL(t) kann beliebig gewählt werden, wohingegen die maximale Frequenz abhängig ist von Parametern der Apparatur, der Mischungskomponenten oder der Mischung, beispielsweise von dem zu dosierenden Medium, der Fördereinrichtung und der axialen Dispersion im Mischer.

Nach einer weiteren bevorzugten Betriebsart ist die Gesamtförderleistung aller Fördereinrichtungen zeitlich konstant.

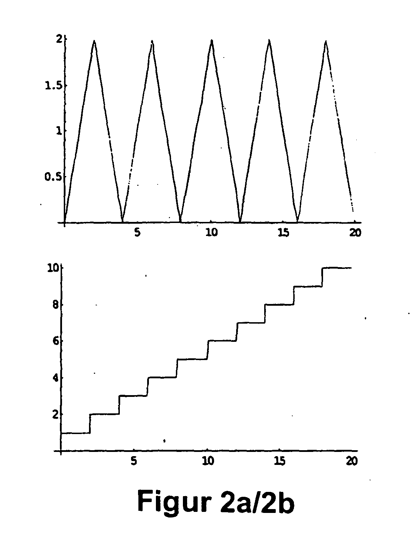

Diese, in den Punkten A) bis L) festgestellten bevorzugten Vorgehensweisen, werden in den Figuren 2a und 2b erläutert. Dargestellt sind die Förder-Zeit-Funktionen FL1(t) [Figur 2a)] und FL2(t) [Figur 2b)] zweier Komponenten, wobei auf der Abszisse die Zeit ( in beliebigen Einheiten ) und auf der Ordinate die Konzentrationen C₁ bzw. C₂ der Komponenten 1 bzw. 2 (in beliebigen Einheiten) aufgetragen sind.

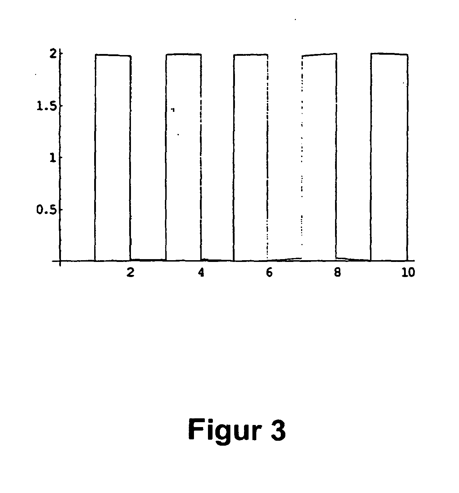

Daraus ergibt sich das in Figur 3 dargestellte Phasenraumdiagramm, wobei Abszisse und Ordinate jeweils die Konzentrationen C₂ und C₁ der Komponenten 2 bzw. 1 in der resultierenden Zusammensetzung darstellen.

Durch das erfindungsgemäße Verfahren lassen sich beliebige Mischungen aus beliebigen förderbaren Medien herstellen, bevorzugt sind Mischungen aus Flüssigkeiten, förderbaren Feststoffen und/oder Gasen.

Bevorzugt werden Mischungen aus fluiden Feststoffen und/oder Polymerschmelzen und/oder Masterbatches hergestellt.

Beispiele für Komponenten der herzustellenden Mischungen sind sämtliche anorganischen oder organischen Materialien, die durch beliebige Bindungen zusammengehalten werden, beispielsweise durch lonenbindungen, kovalente Bindungen oder durch Komplexbildung.

Beispiele für anorganische Materialien sind Metalle, Halbmetalle oder Metallegierungen oder Metallsalze aber auch Metall- bzw. Halbmetalloxide, -sulfide, -sulfite, - sulfate, -phosphate oder -halogenide.

Komponenten der herzustellenden Mischungen können auch Keramiken sein.

Beispiele für organische Materialien sind Verbindungen, die hauptsächlich Kohlenstoff und Wasserstoff aufweisen und daneben gegebenenfalls geringere Anteile an Sauerstoff, Stickstoff, Phosphor und/oder anderen Elementen.

Dabei kann es sich um biologische Materialien oder insbesondere um nichtbiologische Materialien handeln. Neben Verbindungen mit niedrigem Molekulargewicht, beispielsweise bis zu 500 g/mol, werden hochmolekulare Verbindungen eingesetzt, insbesondere Polymere. Neben den klassischen organischen Materialien können auch organometallische Materialien verwendet werden.

Die Komponenten der herzustellenden Mischungen können beliebige Eigenschaften aufweisen, beispielsweise elektrische Leiter (einschließlich der Supraleiter), Halbleiter oder Isolatoren bzw. thermische Leiter oder Isolatoren sein, oder diamagnetische, paramagnetische oder ferromagnetische Eigenschaften.

Durch das erfindungsgemäße Verfahren können auch zwei oder mehrere Zuschlagstoffe gleichzeitig in variierender Konzentration in ein Screening Experiment dosiert werden. So kann beispielsweise durch simultane Variation der Konzentration der Zuschlagstoffe eine Substanzbibliothek generiert werden.

Die nach dem erfindungsgemäßen Verfahren hergestellten Mischungen können ein (gegebenenfalls höherdimensionales) Teilvolumen des Phasendiagramms einer Mehrkomponentenmischung umfassen. Diese sind daher für ein breit angelegtes Hochdurchsatz-Screening geeignet. Konzentrationsbereiche einzelner Mischungsbestandteile von kleiner 1 % können hierbei umfasst werden.

Zur Durchführung eines Hochdurchsatz-Screening können die in dem Mischaggregat kombinatorisch hergestellten Mischungen kontinuierlich in eine der weiteren Verarbeitung und Prüfung zugänglichen Form gebracht werden.

Eine vorteilhafte Variation der Erfindung ist ein Verfahren zur kontinuierlichen Herstellung von Mischungen aus mindestens einem thermoplastischen Polymeren und mindestens einem Zuschlagstoff, dadurch gekennzeichnet, dass mindestens ein thermoplastisches Polymer kontinuierlich oder in einer Pulsfolge einem Mischaggregat zugeführt, aufgeschmolzen und mit einem oder mehreren Zuschlagstoffen gemischt wird, wobei einer oder mehrere Zuschlagstoffe dem Mischaggregat in einer oder mehreren Pulsfolgen zugeführt werden, die Polymermischung kontinuierlich aus dem Mischaggregat ausgetragen und in eine der weiteren Verarbeitung und Prüfung zugänglichen Form überführt wird.

Ein weiterer Vorteil von nach dem vorliegenden Verfahren hergestellten Mischungen liegt darin, dass sich das kontinuierlich hergestellte Produkt leicht in beliebig große diskrete Fraktionen unterteilen lässt, während durch die Verfahren nach dem Stand der Technik durch das Verfahren selbst lediglich diskrete Fraktionen erhältlich sind, deren Eigenschaften vor der Versuchsdurchführung einzeln geplant werden müssen und die nicht in einen kontinuierlichen Produktstrom überführbar sind, auch wenn dies für bestimmte Untersuchungsverfahren vorteilhaft wäre.

Die Lösung der obengenannten Aufgaben wird beispielhaft für ein System mit n Komponenten anhand des in Figur 1 dargestellten Schemas beschrieben.

Die Mischung der Komponenten kann in einem beliebigen Mischaggregat hergestellt werden.

In einer besonders bevorzugten Ausführungsform ist dies ein kontinuierlicher Mischer.

Statische Mischer sind geeignet.

In einer bevorzugten Ausführungsform besteht das Mischaggregat aus mindestens einer Schneckenmaschine.

In einer bevorzugten Ausführungsform werden als Schneckenmaschinen Extruder, besonders bevorzugt Zweischneckenextruder verwendet.

Die Fördereinrichtungen dienen dazu, dem Mischaggregat die Komponenten der zu bildenden Mischung, beispielsweise in Form von Pulver oder Flüssigkeit oder Granulat zu zuführen, entweder in Reinform oder vorgemischt in Masterbatches.

Die Zuführung des oder der Komponenten, beispielsweise von Polymeren und gegebenenfalls von weiteren Additiven, erfolgt dabei kontinuierlich.

Für das erfindungsgemäße Verfahren sind für die Zuführung der Einzelkomponenten zum Mischaggregat die Dosierungsmethoden gemäß Stand der Technik einsetzbar. Eine umfassende Darstellung von in der Praxis eingesetzten Dosiersystemen wurde 1989 in "Dosieren von Feststoffen (Schüttgütern)" von Fa. Gericke herausgegeben. Ergänzend dazu ist im VDI-Bericht "Kunststoffe im Automobilbau", Band Nr.: 4224(2000) ein aktueller Beitrag zu den üblicherweise eingesetzten Dosiersystemen enthalten. Auf diese Schriften wird Bezug genommen.

Bei der Dosierung wird unterschieden zwischen der Einstromdosierung und der Mehrstromdosierung.

Bei der Einstromdosierung werden die Polymere zusammen mit den Zuschlagsstoffen in den Haupteinlauf des Mischaggregats dosiert. Dazu werden Beschickungstrichter sowie Einlaufhilfen mit horizontalen oder vertikalen Schnecken verwendet.

Die Mehrstromdosierung wird auch als fraktionierte Dosierung bzw. Split Feed-Technik bezeichnet. Hier erfolgt die Zugabe verschiedener Bestandteile separat.

Ferner wird unterschieden zwischen volumetrischer Dosierung und gravimetrischer Dosierung.

Bei der volumetrischen Dosierung sind Schnecken für Granulat, Pulver, Faser und Schnitzel geeignete Bauarten, je nach Rieselverhalten des Schüttgutes . ausgerüstet mit sog. Auflockerern. Neben Schnecken werden für die volumetrische Dosierung von Granulat, grobkörnigem Pulver, Fasern oder Flocken auch Vibrationsrinnen oder Banddosierer eingesetzt.

Als gravimetrische Dosiergeräte werden geschwindigkeitsgeregelte und gewichtsgeregelte Dosierbandwaagen, Dosierschneckenwaagen, Differentialdosierwaagen mit Schnecke oder Vibrationsrinne und quasikontinuierliche Schüttwaagen eingesetzt.

Der Ringnutdosierer wird für die volumetrische oder gravimetrische Pulverdosierung von Kleinstmengen (ca. 10 g/h) eingesetzt, da hier Schneckendosierer versagen. Flüssige Bestandteile werden dem Mischaggregat durch i.a. volumetrisch arbeitende Dosierpumpen zugeführt.

Werden die Dosierpumpen mittels Differentialwaage geregelt, so ist auch bei der Zugabe von Flüssigkeiten eine gravimetrische Dosierung möglich.

Zusätzlich ist eine puls- oder rampenförmige Zugabe von Zuschlagsstoffen über weitere Dosiereinheiten möglich.

Für die pulsförmige Zugabe ist beispielsweise eine Abwurfwaage einsetzbar.

Bei den Dosierung wird unterschieden zwischen gravimetrischer und volumetrischer Zugabe.

Bei der Steuereinrichtung für die Fördereinrichtungen zur unabhängigen Regelung der Förderleistung jeder Fördereinrichtung und zur Einstellung der periodisch schwankenden Förderleistung mindestens einer Fördereinrichtung zwischen einem vorbestimmten unteren Grenzwert und einem vorbestimmten oberen Grenzwert kann eine an sich übliche Datenverarbeitungsanlage, beispielsweise ein entsprechend programmierter Computer, eingesetzt werden.

Ein weiterer Gegenstand der Erfindung ist die Verwendung des erfindungsgemäßen Verfahrens zur Herstellung von Substanzbibliotheken für das Hoch-Durchsatz-Screening und andere kombinatorische Methoden.

Bevorzugt werden dazu Formkörper aus Mischungen nach dem erfindungsgemäßen Verfahren hergestellt, vorzugsweise in der Form von Folienbändern, Extrudatsträngen und aus diesen Extrudatsträngen hergestellten Granulaten.

Bevorzugt liegt die Mischung zum Beispiel in Form eines Extrudatstranges oder eines freitragenden Folienbandes vor, so dass diese beispielsweise durch Zerschneiden oder Stanzen des Folienbandes oder Granulierung des Extrudatstranges leicht in diskrete Fraktionen überführt werden kann, wenn dies für die nachfolgende Verarbeitung oder Untersuchung vorteilhaft ist.

Die hergestellte Mischung kann über einen gewissen Zeitraum oder eine gewisse Strecke nach dem Mischaggregat einer definierten Umgebung oder Behandlung oder Behandlungsstrecke ausgesetzt werden.

Hierbei kann die Mischung einem Klima, einem Temperaturprogramm, einer oder mehreren Flüssigkeiten, Feuchtigkeit, einem oder mehreren Gasen, einem oder mehreren Feststoffen oder Mischungen aus Flüssigkeiten und Gasen und Feststoffen, einer oder mehreren elektromagnetischen Strahlungen ausgesetzt werden.

Flüssigkeiten oder Feststoffe können in diesem Zusammenhang alle organischen und anorganischen flüssigen und/oder festen Stoffe und/oder biologische Lebewesen oder Substanzen sein. Eine Behandlung kann auch eine mechanische Belastung sein.

Die erfindungsgemäß hergestellten Mischungen sind vorteilhaft Polymerformulierungen.

Als Polymerformulierungen werden Mischungen eines Polymeren mit einem oder mehreren anderen Polymeren und/oder organischen und/oder anorganischen Zuschlagstoffen verstanden.

Die Zuschlagstoffe (nachstehend auch "Additive" genannt) können flüssig oder fest vorliegen und in den Verarbeitungseigenschaften weit variieren.

Unter Verarbeitungseigenschaften werden beispielsweise die Viskosität, Dichte oder im Falle von Flüssigkeiten die Oberflächenspannung oder im Falle von festen Zuschlagstoffen Korngröße, Kornform, Korngrößenverteilung, Härte, Fließfähigkeit, Adhäsion oder Schüttdichte verstanden.

Die Zuschlagstoffe verleihen der Polymerformulierung die in der jeweiligen Anwendung geforderten Eigenschaften.

Als Beispiele für die große Zahl der im Stand der Technik bekannten Zuschlagstoffe seien beispielsweise Füllstoffe genannt, die in Kugel-, Faseroder Plättchenform mit Abmessungen von 10 nm bis zu einigen Millimeter verwendet werden können. Sie werden hauptsächlich zur Einstellung der mechanischen Eigenschaften der Polymerformulierung eingesetzt.

Weitere Zuschlagstoffe sind beispielsweise Lichtstabilisatoren, insbesondere Stabilisatoren gegen UV- und sichtbares Licht, Flammschutzmittel, Verarbeitungshilfsmittel, Pigmente, Gleit- und Reib-Additive, Haftvermittler, Schlagzähmodifikatoren, Fließmittel, Entformungsmittel, Nukleierungsmittel, Säure- und Basefänger, Oxidations-Stabilisatoren.

Solche Zuschlagstoffe oder Additive für Kunststoffe werden beispielsweise beschrieben von H. Zweifel in: Plastics Additives Handbook, 5th edition, Hanser Verlag 2000, worauf Bezug genommen wird.

Als Zuschlagstoffe können außerdem thermoplastische und/oder nicht thermoplastische Polymere verwendet werden, insbesondere thermoplastische Polymere, so dass Blends und Polymerlegierungen mit Konzentrationsgradienten hergestellt werden.

Der Begriff Polymere im Sinne der Erfindung schließt grundsätzlich alle bekannten, synthetischen, natürlichen und modifizierten natürlichen Polymere ein, also thermoplastische oder duroplastische Polymere einschließlich elastomerer Polymerer.

Beispiele für duroplastische Polymere sind Epoxidharze, Phenolharze oder Alkydharze.

Besonders bevorzugt verwendet man thermoplastische Polymere, die sich durch Schmelzextrusion verarbeiten lassen.

Beispielhaft seien genannt:
Polylactone, wie Poly(pivalolacton), Poly(caprolacton);
Polyurethane, wie die Polymerisationsprodukte der Diisocyanate, wie zum Beispiel von 1,5-Naphthalin-diisocyanat; p-Phenylen-diisocyanat, m-Phenylendiisocyanat, 2,4-Toluyl-diisocyanat, 2,6-Toluylene-diisocyanat, 4,4'-Diphenylmethan-diisocyanat, 3,3'Dimethyl-4,4'-Biphenyl-diisocyanat, 4,4'-Diphenylisopropyliden-diisocyanat, 3,3'Dimethyl-4,4'-diphenyl-diisocyanat, 3,3'-Dimethyl-4,4'-diphenylmethan-diisocyanat, 3,3'-Dimethoxy-4,4'-biphenyldiisocyanat, Dianisidin-diisocyanat, Toluidindiisocyanat, Hexamethylendiisocyanat, 4,4'-Diisocyanatodiphenylmethan, 1,6Hexamethylene-diisocyanat oder 4,4'-Dicyclohexylmethan-diisocyanat mit langkettigen Diolen, wie mit Poly(tetramethylen-adipat), Poly-(ethylen-adipat), Poly-(1,4butylen-adipat), Poly-(ethylen-succinat), Poly-(2,3-butylen-succinat), Polyether diolen und/oder einem oder mehreren Diolen, wie Ethylenglykol, Propylenglykol und/oder ein Polydiol, wie Diethylenglykol, Triethylenglykol und/oder Tetraethylenglykol;
Polycarbonate, wie Poly-[methan-bis(4-phenyl-carbonat), Poly-[1,1-ether bis-(4-phenyl-carbonat), Poly-[diphenylmethan-bis-(4-phenyl-carbonat), Poly-[ 1,1-cyclohexan-bis(phenyl)-carbonat];
Polysulfone, wie das Reaktionsprodukt des Natriumsalzes des 2,2-Bis-(4-hydroxyphenyl)-propans oder des 4,4'-Dihydroxydiphenylethers mit 4,4'-Dichlorodiphenylsulfon;
Polyether, Polyketone und Polyetherketone, wie Polymerisationsprodukte des Hydrochinons, des 4,4'-Dihydroxybiphenyls, des 4,4'-Dihydroxybenzophenons oder des 4,4'-Dihydroxydiphenylsulfons mit dihalogenierten, insbesondere difluorierten oder dichlorierten aromatischen Verbindungen vom Typ 4,4'-Dihalo-diphenylsulfon, 4,4'-Di-halo-dibenzophenon, Bis-4,4'-di-halobezoyl-benzol, 4,4'-Di-halo-biphenyl;
Polyamide, wie Poly-(4-aminobuttersäure), Poly-(hexamethylen-adipamid), Poly-(6-aminohexansäure), Poly-(m-xylylen-adipamid), Poly-(p-xylylensebacamid), Poly-(2,2,2trimethyl-hexamethylen-terephthalamid), Poly-(metaphenylen-isophthalamid) (NOMEX), Poly-(p-phenylen-terephthalamid) (KEVLAR);
Polyester, wie Poly-(ethylen-acetat), Poly-(ethylen-1,5-naphthalat, Poly-(1,4-cyclohexandimethylen-terephthalat), Poly-(ethylen-oxybenzoat) (A-TELL), Poly-(parahydroxy-benzoat) (EKONOL), Poly-(1,4-cyclohexyliden-dimethylenterephthalat) (KODEL), Polyethylenterephthalat, Polybutylenterephthalat;
Poly-(arylenoxide), wie Poly-(2,6-dimethyl-1,4-phenylen-oxid), Poly-(2,6-diphenyl-1,4phenylen-oxid);
Polyacetalhomo- und -copolymere, wie Polyoxymethylenpolymere;
Flüssigkristalline Polymere, wie die Polykondensationsprodukte aus der Gruppe der Monomeren, die besteht aus Terephthalsäure, Isophthalsäure, 1,4-Naphthalindicarbonsäure, 2,6-Napthalindicarbonsäure, 4,4'-Biphenyldicarbonsäure, 4-Hydroxybenzoesäure, 6-Hydroxy-2-naphthalindicarbonsäure, Hydrochinon, 4,4'-Dihydroxybiphenyl, 4-Aminophenol;
Poly-(arylen-sulfide), wie Poly-(phenylensulfid), Poly-(phenylen-sulfid-keton), Poly(phenylen-sulfid-sulfon);
Polyetherimide;
Vinyl Polymere und ihre Copolymere, wie Polyvinyl-acetat, Polyvinyl-chlorid; Polyvinylbutyral, Polyvinyliden-chlorid, Ethylen-vinyl-acetat Copolymere;
Polyacrylderivate, wie Polyacrylat und seine Copolymere, wie Polyethylacrylat, Poly-(n-butyl-acrylat), Polymethylmethacrylat, Polyethylmethacrylat, Poly-(nbutyl-methacrylat), Poly-(n-propyl-methacrylat), Polyacrylnitril, wasserunlösliche Ethylen-Acrylsäure-Copolymere, wasserunlösliche Ethylen-Vinyl-Alkohol-Copolymere, Acrylnithl-Copolymere, Methylmethacrylat-Styrol-Copolymere, Ethylen-Ethylacrylat-Copolymere, Acrylnitril-Butadien-Styrol Copolymere;
Polyolefine wie Polyethylen, insbesondere High Density und Low Density Poly(ethylen), Polypropylen, chloriertes Low Density Poly(ethylen), Poly-(4-methyl-1-penten), Poly(styrol);
Wasserunlösliche lonomere;
Poly(epichlorhydrin);
Furan Polymere, wie Poly(furan);
Zelluloseester, wie Zelluloseacetat, Zelluloseacetat-butyrat, Zellulosepropionat;
Silicone, wie Poly-(dimethyl-siloxan), Poly-(dimethyl-siloxan-co-phenylmethylsiloxan);
Protein Thermoplasten;
sowie alle Mischungen und Legierungen (mischbare und unmischbare Blends) von zwei oder mehreren der genannten Polymere.

Polymere im Sinne der Erfindung umfassen auch Elastomere, die sich beispielsweise von einem oder mehreren der folgenden Polymere ableiten:

Bromierter Butyl-Kautschuk, Chlorierter Butyl-Kautschuk, Polyurethan-Elastomere, Fluorelastomere, Polyester-elastomere, elastomeres Polyvinylchlorid, Butadien/Acrylnitril-Elastomere, Silicon-Elastomere, Poly-(butadien), Poly-(isobutylen), Ethylen-propylen-Copolymere, Ethylen-propylendien-Terpolymere, sulfonierte Ethylen-Propylen-Dien-Terpolymere, Poly-(chloropren), Poly-(2,3-dimethylbutadien), Poly-(butadien-pentadien), chlorsulfonierte Poly-(ethylene), Poly-(sulfid)-Elastomere, Blockcopolymere, aufgebaut aus Segmenten amorpher oder (teil)kristalliner Blöcke wie Poly-(styrol), Poly-(vinyl-toluol), Poly-(t-butyl styrol), Polyester und ähnlichen und elastomeren Blöcke, wie Poly-(butadien), Poly-(isopren), Ethylen-Propylen-Copolymere, Ethylen-Butylen-Copolymere, Ethylen-Isopren-Copolymere und deren hydrierte Abkömmlinge wie zum Beispiel SEBS, SEPS, SEEPS, und auch hydrierte Ethylen-Isopren-Copolymere mit erhöhtem Anteil an 1,2-verknüpften Isopren, Polyether, wie zum Beispiel die von Kraton Polymers unter dem Handelsnamen KRATON® vertriebenen Produkte.

## Patentansprüche

1. Die Verfahren zur kontinuierlichen Herstellung von Mischungen aus mindestens zwei Komponenten umfassend die Schritte:
a) Vorlage der einzelnen Komponenten in Vorratsgefäßen,
b) Zuleitung jeder einzelnen Komponente mittels einer Fördereinrichtung für diese Komponente zu einer Mischeinrichtung,
c) Variation der Förderleistung mindestens einer Fördereinrichtung und
d) Vermischen der einzelnen Komponenten in der Mischeinrichtung,
**dadurch gekennzeichnet, dass** die Variation der Förderleistung periodisch zwischen einem unteren und einem oberen Grenzwert schwankt.

2. Verfahren nach Anspruch 1, **dadurch gekennzeichnet, dass** die Variation der Förderleistung einer Fördereinrichtung monoton steigend oder fallend ist und dass die Variation der Förderleistung aller weiteren Fördereinrichtungen periodisch ist.

3. Verfahren nach Anspruch 1, **dadurch gekennzeichnet, dass** die Variation der Förderleistung verschiedener Fördereinrichtungen periodisch ist und dass die Frequenzen der Variationen sich voneinander unterscheiden.

4. Verfahren nach Anspruch 1, **dadurch gekennzeichnet, dass** die Variation der Förderleistung mindestens einer Fördereinrichtung, vorzugsweise aller periodischen Variationen, einer Sägezahnfunktion oder einer Sinusfunktion entspricht, deren Perioden bevorzugt zeitlich konstant sind.

5. Verfahren nach Anspruch 1, **dadurch gekennzeichnet, dass** die Variation der Förderleistung mindestens einer Fördereinrichtung einer periodischen Treppenfunktion entspricht, deren Perioden und Stufenlängen bevorzugt zeitlich konstant sind.

6. Verfahren nach Anspruch 1, **dadurch gekennzeichnet, dass** Perioden oder Stufenlängen der Variation der Förderleistungen der einzelnen Fördereinrichtungen ganzzahlige Vielfache einer Grundperiode sind, wobei vorzugsweise das Verhältnis zweier beliebiger Perioden oder Stufenlängen der Variation der Förderleistung der Fördereinrichtungen oder wobei vorzugsweise das Verhältnis einer Periode und einer Stufenlänge der Variation der Förderleistung zweier Fördereinrichtungen halbzahlig ist und insbesondere 0,5 oder 1,5 oder 2,5 beträgt.

7. Verfahren nach Anspruch 1, **dadurch gekennzeichnet, dass** das Frequenzverhältnis zweier periodischer Variationen der Förderleistung zweier Fördereinrichtungen proportional der angestrebten Kompositionsgenauigkeit ist.

8. Verfahren nach Anspruch 1, **dadurch gekennzeichnet, dass** die Gesamtförderleistung aller Fördereinrichtungen zeitlich konstant ist.

9. Verfahren nach Anspruch 1, **dadurch gekennzeichnet, dass** mindestens eine Komponente eine Flüssigkeit, ein förderbarer Feststoff oder ein Gas ist.

10. Verfahren nach Anspruch 9, **dadurch gekennzeichnet, dass** mindestens eine Komponente eine Polymerschmelze ist und dass mindestens eine weitere Komponente ein Additiv ist.

11. Verwendung des Verfahrens nach Anspruch 1 zur Herstellung von Substanzbibliotheken für das Hoch-Durchsatz-Screening und andere kombinatorische Methoden.

12. Verwendung nach Anspruch 11, **dadurch gekennzeichnet, dass** Formkörper aus Mischungen nach dem Verfahren hergestellt werden, vorzugsweise in der Form von_Folienbändern, Extrudatsträngen und aus diesen Extrudatsträngen hergestellten Granulaten.

13. Verwendung nach Anspruch 12, **dadurch gekennzeichnet, dass** der Formkörper in Form eines Extrudatstranges oder eines freitragenden Folienbandes vorliegt, aus dem durch Zerschneiden oder Stanzen oder durch Granulierung diskrete Fraktionen erzeugt werden.

## Claims

1. Process for the continuous preparation of mixtures from at least two components, encompassing the steps of:
a) charging the individual components to storage vessels,
b) introducing each individual component by way of a conveying device for that component into a mixing device,
c) varying the conveying rate of at least one conveying device, and
d) mixing the individual components in the mixing device, **characterized in that** the variation of the conveying rate varies periodically between a lower and an upper limiting value.

2. Process according to Claim 1, **characterized in that** the variation of the conveying rate of one conveying device continuously rises or falls, and **in that** the variation in the conveying rate of all of the other conveying devices is periodic.

3. Process according to Claim 1, **characterized in that** the variation of the conveying rate of various conveying devices is periodic and **in that** the frequencies of the variations differ from one another.

4. Process according to Claim 1, **characterized in that** the variation of the conveying rate of at least one conveying device, preferably of all of the periodic variations, corresponds to a sawtooth function or a sine function, the periods thereof preferably being constant over time.

5. Process according to Claim 1, **characterized in that** the variation of the conveying rate of at least one conveying device corresponds to a periodic step function whose periods and step intervals are preferably constant over time.

6. Process according to Claim 1, **characterized in that** the periods or step intervals for the variation of the conveying rates of the individual conveying devices are an integral multiple of a base period, where the ratio of any two desired periods or step intervals for the variation of the conveying rate of the conveying devices, or the ratio of a period and a step interval for the variation of the conveying rate of two conveying devices, is preferably equal to half of a whole number, and is in particular 0.5, or 1.5, or 2.5.

7. Process according to Claim 1, **characterized in that** the frequency ratio of two periodic variations of the conveying rate of two conveying devices is proportional to the compositional resolution desired.

8. Process according to Claim 1, **characterized in that** the total conveying rate of all of the conveying devices is constant over time.

9. Process according to Claim 1, **characterized in that** at least one component is a liquid, a conveyable solid, or a gas.

10. Process according to Claim 9, **characterized in that** at least one component is a polymer melt, and **in that** at least one other component is an additive.

11. Use of the process according to Claim 1 for producing substance libraries for high-throughput screening and other combinatorial methods.

12. Use according to Claim 11, **characterized in that** moldings are produced by the process from the mixtures and preferably take the form of film strips, or extrudates, or pellets produced from these extrudates.

13. Use according to Claim 12, **characterized in that** the molding is an extrudate or an unsupported film strip, from which discrete fractions are produced by chopping or stamping, or by pelletizing.

## Revendications

1. Procédé de préparation en continu de mélanges d'au moins deux composants, lequel procédé comprend les étapes qui consistent à :
a) prévoir les différents composants dans des récipients de réserve,
b) amener chacun des différents composants dans un dispositif de mélange au moyen d'un dispositif de transport de ces composants,
c) modifier la capacité de transport d'au moins un dispositif de transport et
d) mélanger les différents composants dans le dispositif de mélange,
**caractérisé en ce que** la variation de la capacité de transport oscille périodiquement entre une valeur frontière inférieure et une valeur frontière supérieure.

2. Procédé selon la revendication 1, **caractérisé en ce que** la variation de la capacité de transport d'un dispositif de transport croît ou décroît de manière monotone et **en ce que** la variation de la capacité de transport de tous les autres dispositifs de transport est périodique.

3. Procédé selon la revendication 1, **caractérisé en ce que** la variation de la capacité de transport de différents dispositifs de transport est périodique et **en ce que** les fréquences des variations sont différentes les unes des autres.

4. Procédé selon la revendication 1, **caractérisé en ce que** la variation de la capacité de transport d'au moins un dispositif de transport et de préférence toutes les variations périodiques correspondent à une fonction en dents de scie ou à une fonction sinusoïdale dont la période est de préférence constante.

5. Procédé selon la revendication 1, **caractérisé en ce que** la variation de la capacité de transport d'au moins un dispositif de transport correspond à une fonction périodique en échelons dont la période et la longueur des échelons sont de préférence constantes.

6. Procédé selon la revendication 1, **caractérisé en ce que** les périodes ou les longueurs des échelons de la variation des capacités de transport des différents dispositifs de transport sont des multiples entiers d'une période de base, le rapport entre deux périodes quelconques ou deux longueurs d'échelon quelconques de la variation de la capacité de transport des dispositifs de transport ou de préférence le rapport entre une période et une longueur d'échelon de la variation de la capacité de transport de deux dispositifs de transport est un demi-entier et vaut en particulier 0,5, 1,5 ou 2,5.

7. Procédé selon la revendication 1, **caractérisé en ce que** le rapport entre les fréquences de deux variations périodiques de la capacité de transport de deux dispositifs de transport est proportionnelle à la précision souhaitée de la composition.

8. Procédé selon la revendication 1, **caractérisé en ce que** la capacité globale de transport de tous les dispositifs de transport est constante dans le temps.

9. Procédé selon la revendication 1, **caractérisé en ce qu'**au moins un composant est un liquide, un solide transportable ou un gaz.

10. Procédé selon la revendication 9, **caractérisé en ce qu'**au moins un composant est un polymère fondu et **en ce qu'**au moins un autre composant est un additif.

11. Utilisation du procédé selon la revendication 1 pour la préparation des bibliothèques de substances pour le tri à haut débit et d'autres méthodes combinatoires.

12. Utilisation selon la revendication 11, **caractérisée en ce que** l'on prépare avec le procédé des corps moulés constitués de mélanges et de préférence sous la forme de nappes de feuille, de barres extrudées et de granulés fabriqués à partir de ces barres extrudées.

13. Utilisation selon la revendication 12, **caractérisée en ce que** le corps moulé présente la forme d'une barre extrudée ou d'une nappe de feuilles autoportante à partie de laquelle on forme des fractions discrètes par déchiquetage, estampage ou granulation.
